# EUROPÄISCHE PATENTSCHRIFT

(11) **EP 0 659 599 B1**
(45) Veröffentlichungstag und Bekanntmachung des Hinweises auf die Patenterteilung: **21.05.1997**
(21) Anmeldenummer: 94115726.5
(22) Anmeldetag: 06.10.1994
(51) Int. Cl.: B60H 1/00

(54) **Regelaggregat für eine Kraftfahrzeug-Klimaanlage**
Vehicle air conditioning control unit
Régulateur de conditionnement d'air pour véhicule

(30) Priorität: 23.12.1993 DE 4344054
(43) Veröffentlichungstag der Anmeldung: 28.06.1995
(73) Patentinhaber: PREH-WERKE GmbH & Co. KG, 97615 Bad Neustadt a.d. Saale (DE)
(72) Erfinder: Rüttiger, Anton, D-97772 Wildflecken (DE)

(56) Entgegenhaltungen:
- EP-A- 0 170 107
- EP-A- 0 467 151
- EP-A- 0 510 317
- DE-A- 3 541 263
- DE-A- 3 604 089
- DE-C- 4 142 648

## Beschreibung

Die Erfindung betrifft ein Regelaggregat für eine Kraftfahrzeug-Klimaanlage, das frontseitig in ein Armaturenbrett einbaubar ist, das ein Gehäuse aufweist, in dem wenigstens zwei elektronische Bauteile tragende Leiterplatten angeordnet sind und das einen Raum bildet, der eine frontale Zuluftöffnung aufweist und in dem ein von einem Motor angetriebenes Gebläserad angeordnet ist, welches einen Luftstrom über einen Sensor fördert.

In der EP 0 170 107 B1 ist ein Regelaggregat als Bedieneinheit beschrieben. Diese weist Stellglieder, beispielsweise Drehknöpfe, auf, mit denen auf die Klimaanlage eingewirkt werden kann. Außerdem sind Anzeigeeinrichtungen vorgesehen.

Aus der DE 36 04 089 A1 ist ein Gebläse mit einem Luftleitkanal bekannt. Dabei dient ein wärmeleitender Wandungsabschnitt des Luftleitkanals als Kühlkörper für eine Regelelektronik.

In der DE 35 41 263 A1 ist eine Klimaanlage für Kraftfahrzeuge beschrieben. Ein Temperaturfühler ist zur Messung der Innenraumtemperatur in einem Meßluftstrom angeordnet, der aus dem Innenraum abgezogen wird. Hierfür dient bei der DE 35 41 263 A1 dasjenige Gebläse, das auch die erwärmte Luft in den Innenraum des Kraftfahrzeugs fördert. Ein eigenes Gebläse für den Meßluftstrom ist hier zwar nicht erforderlich; jedoch ergibt sich ein korrekter Meßwert nur, wenn das Gebläse läuft, also Luft in den Innenraum gefördert wird. Der Temperaturfühler muß über eine externe Leitung an eine an anderer Stelle untergebrachte Regelschaltung angeschlossen werden. Damit ist ein Montageaufwand verbunden.

Es ist auch bekannt, den Temperaturfühler und das über ihn aus dem Kraftfahrzeug-Innenraum Luft fördernde Gebläse in einem separaten Meßluftkanal anzuordnen. Diese Baugruppe muß getrennt von dem Regelaggregat im Armaturenbrett montiert und an die elektrische Regelschaltung angeschlossen werden. Ein derartiger Aufbau ist hinsichtlich der Konstruktion, des Platzbedarfes und der Montage aufwendig.

In der EP 0 510 317 A2 ist ein Regelaggregat der eingangs genannten Art beschrieben. Das Gebläse und der Temperaturfühler sind in das Gehäuse des Regelaggregates integriert. Allerdings sind der Temperaturfühler und das Gebläse offen im Gehäuse untergebracht. Dies hat zur Folge, daß die elektronischen Bauteile von der vom Gebläse geförderten Luft beaufschlagt werden. Sie werden dadurch zwar gekühlt, verschmutzen jedoch schnell, was die gewünschte Kühlung beeinträchtigt und ihre Funktion gefährdet.

Aufgabe der Erfindung ist es, ein Regelaggregat der eingangs genannten Art vorzuschlagen, bei dem elektronische Bauteile gekühlt und die elektronischen Beuteile vom Luftstrom geschützt sind und der Aufbau einfach ist.

Erfindungsgemäß ist obige Aufgabe bei einem Regelaggregat der eingangs genannten Art dadurch gelöst, daß der Raum des Gehäuses einen gegenüber den elektronischen Bauteilen der Leiterplatte abgedeckten Luftleitschacht bildet und daß zur wärmeleitenden Verbindung wenigstens eines elektronischen Bauteiles der ersten Leiterplatte mit dem Meßluftstrom wenigstens ein Wärmeleitblech vorgesehen ist, das zugleich die zweite Leiterplatte trägt.

Im Luftleitschacht sind das Gebläserad und dessen Motor angeordnet. Der über den Sensor geführte Meßluftstrom gelangt jedoch nicht an die auf der Leiterplatte angeordneten elektronischen Bauteile. Diese sind damit weder der Staubbeladung noch der Feuchtigkeit des Meßluftstromes ausgesetzt.

Die räumliche Trennung der elektronischen Bauteile vom Meßluftstrom, d.h. die Wandung des Luftleitschachts, ist baulich einfach dadurch zu gestalten, daß die Seite der Leiterplatte, die keine elektronischen Bauteile trägt, selbst und/oder an einem Gehäuseteil angeformte Wandteile und/oder das Wärmeleitblech den Luftleitschacht gegenüber dem übrigen Raum des Gehäuses abschotten. Es erübrigt sich dadurch ein Schutzlacküberzug der Bauteile der Leiterplatte, was die Herstellungskosten reduziert und umweltfreundlich ist.

Das Wärmeleitblech führt zu einer wirkungsvollen Kühlung speziell eines Wärme entwickelnden Leistungshalbleiters, weil das Wärmeleitblech mit diesem in wärmeleitendem Kontakt steht und im Meßluftstrom liegt, so daß der Leistungshalbleiter indirekt - ohne Beaufschlagung durch den Meßluftstrom - vom Meßluftstrom gekühlt wird. Ein üblicher Kühlkörper, der Platz beansprucht, erübrigt sich dabei.

Das Wärmeleitblech ragt vorzugsweise im Meßluftstrom hinter dem Sensor in den Luftleitschacht. Dadurch ist gewährleistet, daß die vom Wärmeleitblech an den Meßluftstrom abgegebene Wärme die Temperatur am Sensor nicht beeinflußt. Der Sensor ist gewöhnlich ein Temperatursensor. Bei Klimaanlagen, die auch auf Feuchtigkeit oder Luftqualität reagieren sollen, kann zusätzlich zum Temperatursensor ein Feuchtigkeitssensor oder ein Geruchssensor vorgesehen sein.

Das Wärmeleitblech ist vorzugsweise räumlich so gestaltet, daß es elektrische Störstrahlungen abschirmt (EMV-Abschirmung). Es dient als Träger für eine weitere Leiterplatte und bedarfsweise für weitere Bauteile des Regelaggregats. Es kann auch als Luftleitblech für den Luftleitschacht dienen.

Durch die Erfindung ist insgesamt ein Regelaggregat geschaffen, das sich kostengünstig herstellen und kostengünstig in ein Armaturenbrett eines Kraftfahrzeugs einbauen und an die Apparate, wie Klappen, Wärmetauscher, der Klimaanlage anschließen läßt, weil in ihm die die Bedienelemente, Anzeigeelemente, der Sensor, die Erzeugung des Meßluftstroms und die Regelelektronik integriert sind, ohne daß durch diese Integration Funktionsstörungen zu erwarten sind.

Vorteilhafte Ausgestaltungen der Erfindung ergeben sich aus den Unteransprüchen und der folgenden Beschreibung. In der Zeichnung zeigen:
- Figur 1: ein Regelaggregat für den Einbau in ein Kraftfahrzeug-Armaturenbrett schematisch im Schnitt längs der Linie I-I nach Figur 2,
- Figur 2: das Regelaggregat im Schnitt längs der Linie II-II nach Figur 1 und
- Figur 3: eine andere Ausführung des Regelaggregats in einer Figur 2 entsprechenden Schnittansicht.

Ein Regelaggregat (1) ist in ein Armaturenbrett (2) eines Kraftfahrzeugs einbaubar. Eine Frontseite (3) des Regelaggregats (1) liegt dabei zum Innenraum (4) des Kraftfahrzeugs offen.

Das Regelaggregat (1) weist ein frontseitiges Gehäuseteil (5) und ein rückseitiges Gehäuseteil (6) auf, die miteinander verbunden sind. An der Frontseite (3) sind Bedienelemente (7) zur Sollwerteinstellung der Klimaanlage vorgesehen. Die Bedienelemente sind beispielsweise Tasten eines Tastenfeldes, wenigstens ein Drehknopf oder Schieber. An der Frontseite (3) sind auch Anzeigefenster (8) gebildet. Außerdem sind an der Frontseite (3) Ansaugöffnungen (9) für einen aus dem Innenraum (4) abgesaugten Meßluftstrom (L) ausgebildet.

In dem Gehäuse (5, 6) ist wenigsten eine, im Beispielsfalle zwei, Leiterplatten (10) befestigt, die elektronische Bauteile (11) tragen, von denen wenigstens eines ein Leistungshalbleiter (12) ist, der gekühlt werden muß. Die elektronischen Bauteile (11) dienen der Regelung der Klimaanlage.

In dem Gehäuse (5, 6) ist ein Luftleitschacht (13) ausgebildet. In diesem ist ein Gebläserad (14) mit einem elektrischen Motor angeordnet, dessen Rotor (15) am Gebläserad (14) befestigt ist und dessen Statorwicklungen (16) zusammen mit einem Lager des Gebläserads (14) an einem Trägerblech (17) befestigt ist. Der Motor (15, 16) liegt ungekapselt im Luftleitschacht (13).

Das Trägerblech (17) ist an einer Halterung (18) elastisch gelagert, die an der Leiterplatte (10) befestigt ist. Die Statorwicklungen (16) sind über das Trägerblech (17) und die Halterung (18) an die Leiterplatte (10) angeschlossen, an der zusätzlich eine elektronische Kommutierungsschaltung zum Betrieb des Motors (15, 16) aus dem Gleichstromnetz des Fahrzeugs angeordnet ist.

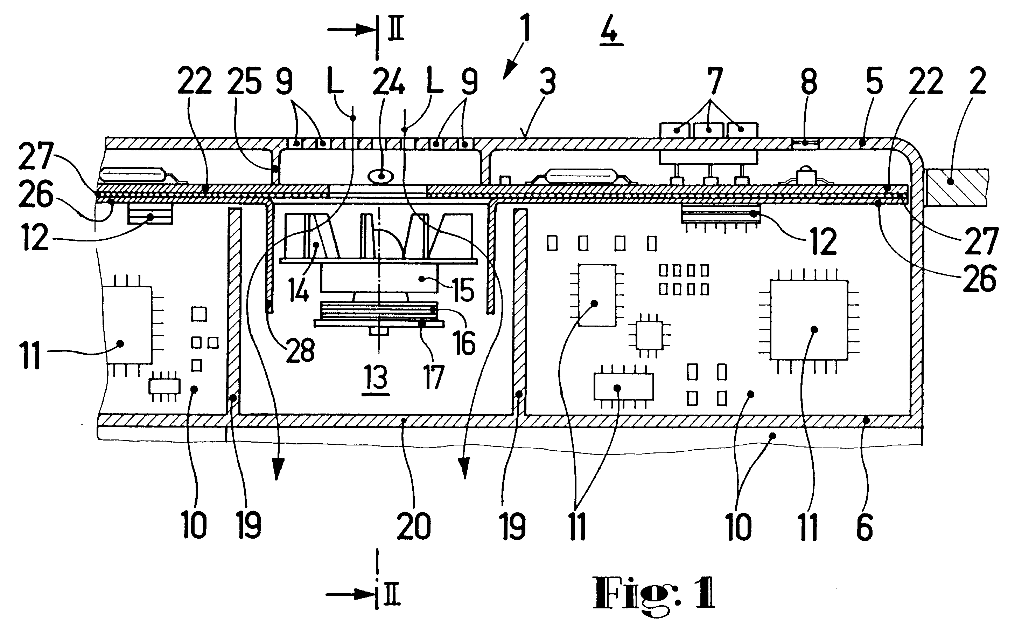

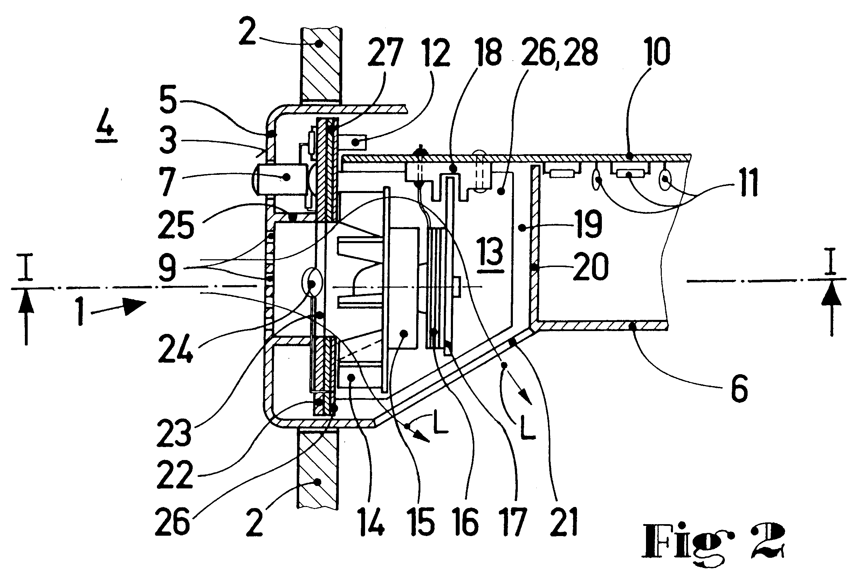

Der Luftleitschacht (13) ist seitlich (vgl. Figur 1) durch Wandteile (19) begrenzt, die einstückig mit dem rückseitigen Gehäuseteil (6) ausgebildet sind. Oben ist der Luftleitschacht (13) durch die Leiterplatte (10) abgedeckt, die auf der dem Luftleitschacht (13) zugeordneten Seite keine elektronischen Bauteile trägt (vgl. Figur 2).

Hinten und unten teilweise ist der Luftleitschacht (13) ebenfalls durch Wandteile (20) des Gehäuses (5, 6) abgedeckt, die eine Abluftöffnung (21) freilassen (vgl. Figur 2).

In dem Gehäuse (5, 6) ist eine weitere Leiterplatte (22) angeordnet, die etwa parallel zur Frontseite (3) liegt. Die Leiterplatte (22) steht etwa senkrecht zur Leiterplatte (10). Zwischen den Ansaugöffnungen (9) und dem Gebläserad (14) weist die weitere Leiterplatte (22) eine Öffnung (23) auf. Zwischen den Ansaugöffnungen (9) und dem Gebläserad (14) ist im Bereich der Öffnung (23) ein Temperatursensor (24) angeordnet, der elektrisch mit der Leiterplatte (10) oder über die Leiterplatte (22) mit der Leiterplatte (10) verbunden ist. Die Leiterplatten (10, 22) können über Steckverbindungen miteinander kontaktiert sein. Auf der weiteren Leiterplatte (22) sind elektromechanische, elektronische und/oder elektrooptische Bauteile angeordnet, die die Steuerbefehle der Bedienelemente (7) verarbeiten und, beispielsweise als lichtemittierende Dioden zur Anzeige eines Soll- oder Istzustandes, insbesondere Temperatur, durch die Anzeigefenster (8) sichtbar sind.

Die mit Bauteilen bestückte Seite der weiteren Leiterplatte (22) ist der Frontseite (3) zugewandt. Um zu vermeiden, daß durch den dadurch bedingten Abstand zwischen der Frontseite (3) und der weiteren Leiterplatte (22) eine direkte Luftverbindung besteht, ist am frontseitigen Gehäuseteil (5) ein Ring (25) ausgebildet. Bei laufendem Gebläse wird somit Luft nur durch die Ansaugöffnungen (9) über den Temperatursensor (24) angesaugt.

In dem Gehäuse (5, 6) ist wenigstens ein Wärmeleitblech (26) - im Ausführungsbeispiel zwei Wärmeleitbleche - angeordnet. Das Wärmeleitblech (26) verläuft beim Ausführungsbeipiel nach den Figuren 1 und 2 über eine lange Strecke parallel zur weiteren Leiterplatte (22), so daß sie selbst deren Träger bilden kann. Zwischen dem Wärmeleitblech (26) und der weiteren Leiterplatte (22) ist eine thermisch und elektrisch isolierende Folie (27) angeordnet.

Das Wärmeleitblech (26) ragt mit seinem gegenüber der weiteren Leiterplatte (22) abgewinkelten freien Ende (28) in den Luftleitschacht (13). Es kann dort gefiedert bzw. geschlitzt sein. Das Wärmeleitblech (26) ragt auch in den Bereich der Leiterplatte (10). Der dort vorgesehene Leistungshalbleiter (12) ist zur Wärmeübertragung federnd und großflächig an das Wärmeleitblech (26) angedrückt.

Das bzw. die Wärmeleitbleche (26) können auch selbst mit ihren Enden (28) die Wandteile (19) ganz oder teilweise ersetzen, um den Luftleitschacht (13) lufttechnisch gegenüber den elektronischen Bauteilen (11, 12) der Leiterplatte (10) abzuschotten. Sie können zugleich auch als Luftlenkbleche gestaltet sein.

Beim Ausführungsbeispiel nach den Figuren 1 und 2 liegt die Drehachse des Gebläserades (14) parallel zur Hauptebene der Leiterplatte (10). Es ist deshalb das Trägerblech (17) günstig, um das Gebläse, speziell dessen Statorwicklungen (16) an der Leiterplatte (10) zu befestigen.

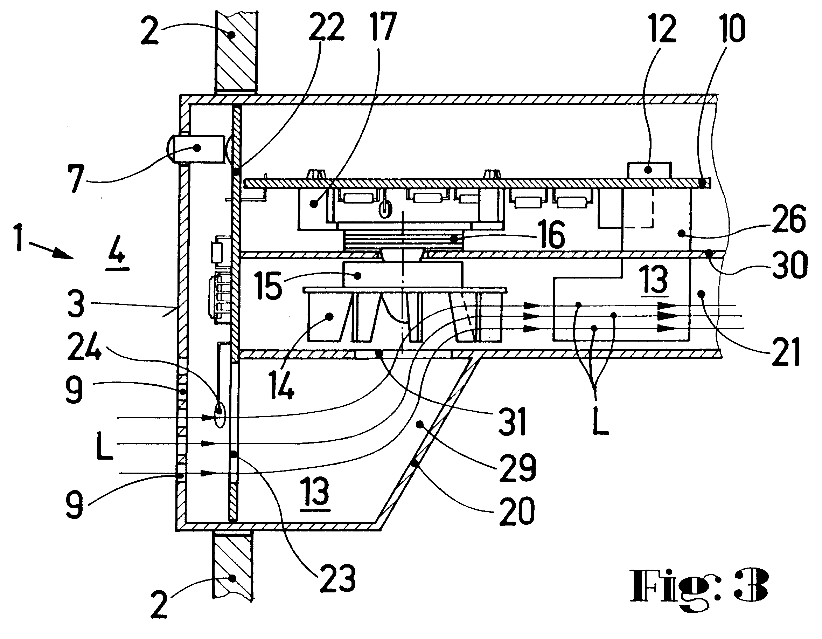

Beim Ausführungsbeispiel nach Fig. 3 steht die Drehachse des Gebläserades (14) bzw. des Motors (15, 16) senkrecht zur Leiterplatte (10). Da das Gebläserad (14) auch hier als Axial/Radial-Lüfterrad arbeitet, ist ein Umlenkraum (29) im Gebläse (5, 6) vorgesehen. Zwischen dem Gebläserad (14) und dessen Motor (15, 16) erstreckt sich eine Trennwand (30), welche die Leiterplatte (10) und den Rotor (15) sowie den Stator (16) gegenüber dem Luftleitschacht (13) abdeckt. Die Trennwand (30) kann ganz oder teilweise an dem frontseitigen Gehäuseteil (5) oder dem rückseitigen Gehäuseteil (6) ausgebildet sein, oder zwischen diese als selbständiges Element eingebaut sein. Die Ausführung nach Fig. 3 hat den Vorteil, daß der Motor einfach an mehreren weit beabstandeten Punkten an der Leiterplatte (10) elastisch befestigt werden kann und daß der ungekapselte Motor außerhalb des Luftleitschachts (13) liegt, so daß er gegenüber dem den Luftleitschacht (13) durchziehenden Luftstrom (L) abgeschirmt ist.

Das Wärmeleitblech (26) ragt durch die Trennwand (30) hindurch in den Luftleitschacht (13). Die Trennwand (30) kann auch selbst von dem Wärmeleitblech (26) gebildet sein. Sie ist dann wärmeleitend mit zu kühlenden elektronischen Bauteilen (12) verbunden. Die Trennwand (30) liegt weit beabstandet vom Temperatursensor (24). Der ihn überstreichende Luftstorm aus dem Kraftfahrzeuginnenraum gelangt erst an die Trennwand (30), wenn er durch eine zum Gebläserad (14) axiale Blende (31) des Umlenkraumes (29) gefördert ist, so daß eine Temperaturbeeinflussung des Temperatursensors (24) durch die wärmeleitende Trennwand (30) ausgeschlossen ist.

Die Wirkungsweise der beschriebenen Einrichtung ist im wesentlichen folgende:

Beim Betrieb der Klimaanlage des Kraftfahrzeugs saugt das Gebläserad (14) über den Temperatursensor (24) durch die Ansaugöffnung (9) Luft aus dem Innenraum des Kraftfahrzeugs an. Der Sensor gibt dementsprechend einen Istwert an die Regelelektronik (10,11,12,22). Dementsprechend wird die Klimaanlage gesteuert. Der Luftstrom (L) kühlt hinter dem Temperatursensor (24) Leistungshalbleiter (12) der Steuerelektronik indirekt über das Wärmeleitblech (26) bzw. die Wärmeleitbleche (26) bzw. die Trennwand (30). Der Meßluftstrom (L) verläßt das Regelaggregat dann an einer für die Temperaturbestimmung nicht entscheidenden Stelle. Die elektronischen Bauteile des Regelaggregats sind durch den Meßluftstrom nicht belastet. Es läßt sich damit auf einfache Weise auch ein einfacher, ungekapselter Motor mit elektronischer Kommutierung einsetzen.

### Bezugszeichenliste

- 1: Regelaggregat
- 2: Armaturenbrett
- 3: Frontseite
- 4: Innenraum
- 5: frontseitiges Gehäuseteil
- 6: rückseitiges Gehäuseteil
- 7: Bedienelemente
- 8: Anzeigefenster
- 9: Ansaugöffnung
- 10: Leiterplatte
- 11: Elektronik-Bauteil
- 12: Leistungshalbleiter
- 13: Luftleitschacht
- 14: Gebläserad
- 15: Rotor
- 16: Statorwicklung
- 17: Trägerblech
- 18: Halterung
- 19: Wandteil
- 20: Wandteil
- 21: Abluftöffnung
- 22: Leiterplatte
- 23: Öffnung
- 24: Temperatursensor
- 25: Ring
- 26: Wärmeleitblech
- 27: Isolierfolie
- 28: Ende
- 29: Umlenkraum
- 30: Trennwand
- 31: Blende
- L: Meßluftstrom

## Patentansprüche

1. Regelaggregat für eine Kraftfahrzeug-Klimaanlage, das frontseitig in ein Armaturenbrett einbaubar ist, das ein Gehäuse (5,6) aufweist, in dem wenigstens zwei elektronische Bauteile tragende Leiterplatten (10,22) angeordnet sind und das einen Raum bildet, der eine frontale Zuluftöffnung (9) aufweist und in dem ein von einem Motor antreibbares Gebläserad (14) angeordnet ist, welches einen Meßluftstrom (L) über einen Sensor (24) fördert,
dadurch gekennzeichnet,
daß der genannte Raum des Gehäuses (5, 6) einen gegenüber den elektronischen Bauteilen (11, 12) der Leiterplatten (10,22) abgedeckten Luftleitschacht (13) bildet und daß zur wärmeleitenden Verbindung wenigstens eines elektronischen Bauteils (12) der ersten Leiterplatte (10) mit dem Meßluftstrom (L) wenigstens ein Wärmeleitblech (26) vorgesehen ist, das zugleich die zweite Leiterplatte (22) trägt.

2. Regelaggregat nach Anspruch 1,
dadurch gekennzeichnet,
daß der elektrische Motor (15, 16) federelastisch an der Leiterplatte (10) befestigt ist.

3. Regelaggregat nach einem der vorhergehenden Ansprüche,
dadurch gekennzeichnet,
daß der elektrische Motor (15, 16) elektronisch kommutiert ist und daß die Kommutierungsschaltung auf der Leiterplatte (10) angeordnet ist.

4. Regelaggregat nach einem der vorhergehenden Ansprüche,
dadurch gekennzeichnet,
daß der Luftleitschacht (13) durch die Leiterplatte (10) selbst gegenüber den elektronischen Bauteilen (11, 12) teilweise abgedeckt ist.

5. Regelaggregat nach einem der vorhergehenden Ansprüche,
dadurch gekennzeichnet,
daß der Luftleitschacht (13) duch das Wärmeleitblech (26) ganz oder teilweise gegenüber den elektronischen Bauteilen (11, 12) abgedeckt ist.

6. Regelaggregat nach einem der vorhergehenden Ansprüche,
dadurch gekennzeichnet,
daß im Luftleitschacht (13) das Gebläserad (14) angeordnet ist und dessen Motor (15, 16) durch eine Trennwand (30) getrennt außerhalb des Luftleitschachts (13) angeordnet ist.

7. Regelaggregat nach einem der vorhergehenden Ansprüche
dadurch gekennzeichnet,
daß das Wärmeleitblech (26) im Luftleitschacht (13 zugleich ein Luftleitblech bildet.

8. Regelaggregat nach einem der vorhergehenden Ansprüche,
dadurch gekennzeichnet,
daß die zweite Leiterplatte (22) parallel zur Frontseite (3) des Gehäuses (5, 6) liegt und eine Öffnung (23) aufweist, in der der Sensor (24) angeordnet ist.

## Claims

1. Regulating unit for a motor vehicle air conditioning installation, which can be installed in the front of an instrument panel, having a housing (5, 6) containing at least two conductor plates (10, 22) carrying electronic components, and forming a chamber having a front air supply aperture (9) and containing a motor-driven impeller (14) which conveys a monitored air flow (L) via a sensor (24),
characterised in that
the above-mentioned chamber of the housing (5, 6) forms an air flow compartment (13) which is covered with respect to the electronic components (11, 12) of the conductor plates (10, 22), and in that for the heat-conductive connection of at least one electronic component (12) of the first conductor plate (10) to the monitored air flow (L), at least one thermal baffle plate (26) is provided, which at the same time carries the second conductor plate (22).

2. Regulating unit according to claim 1,
characterised in that
the electric motor (15, 16) is secured in a resilient manner to the conductor plate (10).

3. Regulating unit according to one of the preceding claims,
characterised in that
the electric motor (15, 16) is electronically commutated and in that the commutation circuit is arranged on the conductor plate (10).

4. Regulating unit according to one of the preceding claims,
characterised in that
the air flow compartment (13) is partially covered by the conductor plate (10) itself with respect to the electronic components (11, 12).

5. Regulating unit according to one of the preceding claims,
characterised in that
the air flow compartment (13) is completely or partially covered by the thermal baffle plate (26) with respect to the electronic components (11, 12).

6. Regulating unit according to one of the preceding claims,
characterised in that
the impeller (14) is arranged in the air flow compartment (13), and its motor (15, 16), separated by a dividing wall (30), is arranged outside the air flow compartment (13).

7. Regulating unit according to one of the preceding claims,
characterised in that
the thermal baffle plate (26) in the air flow compartment (13) at the same time forms an air baffle plate.

8. Regulating unit according to one of the preceding claims,
characterised in that
the second conductor plate (22) is parallel to the front side (3) of the housing (5, 6) and has an aperture (23) in which the sensor (24) is arranged.

## Revendications

1. Bloc de régulation pour une installation de climatisation de véhicule qui peut s'installer en face frontale du tableau de bord, qui présente un boîtier (5,6) dans lequel sont disposées au moins deux cartes à circuit imprimé (10,22) portant des composants électroniques et qui forme un espace qui présente une ouverture frontale (9) d'admission de l'air et dans lequel est disposée une roue de ventilateur (14) qui peut être entraînée par un moteur et qui fait circuler, en passant par un détecteur (24), un flux d'air (L) faisant l'objet d'une mesure,
caractérisé
par le fait que l'espace, mentionné, du boîtier (5, 6) forme une gaine (13) de guidage de l'air isolée des composants électroniques (11, 12) des cartes à circuit imprimé (10, 22) et que pour la liaison conductrice de la chaleur d'au moins un composant électronique (12) de la première carte à circuit imprimé (10) avec le flux d'air (L) faisant l'objet d'une mesure, est prévue au moins une tôle (26) conductrice de la chaleur qui en même temps porte la seconde carte à circuit imprimé (22).

2. Bloc de régulation selon la revendication 1,
caractérisé
par le fait que le moteur électrique (15, 16) est fixé de façon élastique à la carte à circuit imprimé (10).

3. Bloc de régulation selon l'une des revendications précédentes,
caractérisé
par le fait que le moteur électrique (15, 16) est commuté électroniquement et que le circuit de commutation est disposé sur la carte à circuit imprimé (10).

4. Bloc de régulation selon l'une des revendications précédentes,
caractérisé
par le fait que la gaine (13) de guidage de l'air est partiellement isolée des composants électroniques (11, 12) par la carte à circuit imprimé (10) elle-même.

5. Bloc de régulation selon l'une des revendications précédentes,
caractérisé
par le fait que la gaine (13) de guidage de l'air est totalement ou partiellement isolée des composants électroniques (11, 12) par la tôle (26) conductrice de la chaleur.

6. Bloc de régulation selon l'une des revendications précédentes,
caractérisé
par le fait que dans la gaine (13) de guidage de l'air est disposée la roue de ventilateur (14) et que son moteur (15, 16) est disposé à l'extérieur de la gaine (13) de guidage de l'air dont il est séparé par une cloison (30).

7. Bloc de régulation selon l'une des revendications précédentes,
caractérisé
par le fait que la tôle (26) conductrice de la chaleur forme en même temps, dans la gaine (13) de guidage de l'air, une tôle de guidage de l'air.

8. Bloc de régulation selon l'une des revendications précédentes,
caractérisé
par le fait que la seconde carte à circuit imprimé (22) est placée parallèlement à la face frontale (3) du boîtier (5, 6) et présente une ouverture (23) dans laquelle est disposé le détecteur (24).
